# EUROPEAN PATENT SPECIFICATION

(11) **EP 3 145 006 B1**
(45) Date of publication and mention of the grant of the patent: **23.01.2019**
(21) Application number: 16187286.6
(22) Date of filing: 05.09.2016
(51) Int. Cl.: H01M 4/73, H01M 4/84, B23K 11/00, H01M 4/14

(54) **BATTERY GRID AND METHOD OF MAKING**
BATTERIEGITTER UND VERFAHREN ZUR HERSTELLUNG
GRILLE DE BATTERIE ET SON PROCÉDÉ DE FABRICATION

(30) Priority: 18.09.2015 US 201514858933
(43) Date of publication of application: 22.03.2017
(73) Proprietor: MiTek Holdings, Inc., Wilmington, DE 19801 (US)
(72) Inventor: ROSSI, Jeffrey Anthony, Toronto, Ontario M9P 2P4 (CA); SALEH, Victor, Brampton, Ontario L6W 4E4 (CA); KILIC, Omer Ertugrul, Toronto, Ontario M6E 3Z2 (CA)
(74) Representative: Smaggasgale, Gillian Helen

(56) References cited:
- US-A- 388 960
- US-A- 1 238 211
- US-A- 3 453 145
- US-A- 3 873 366
- US-A1- 2002 150 822

## Description

### FIELD OF THE INVENTION

The present invention generally relates to lead acid batteries, and more specifically, a battery grid for use in a lead acid battery.

### BACKGROUND

Lead acid batteries are used in many fields, such as industrial applications, motive power, telecomm batteries, and more. Battery grids for use in lead acid batteries are typically produced using a book molding procedure (i.e., gravity casting). In a book molding process, molten lead is gravity-fed into a grid-shaped mold and solidified. The lead battery grid is then released, and the process is repeated to form another grid.

Book molded battery grids are produced such that their outer borders are significantly thicker and wider than their inner current-carrying wires. This is necessary to promote proper flow patterns of lead within the mold and to allow each part of the grid to become full with lead prior to solidification. The thicker outer borders permit "over-pasting" or applying battery paste on the entire grid to the thickness of the outer borders, thereby completely covering the internal current-carrying wires. Over-pasting protects the current-carrying wires from corrosion over time and with use of the finished battery. Although book molded battery grids have these desirable features, they also suffer from several disadvantages. One operation of the book mold caster produces one battery grid. Book mold machines have many disadvantages, such as slow cycle time, low production rate per machine, requirement for skilled labor, environmentally hazardous mold cleaning and corking process, and a high labor requirement. Battery grids made by book molding have a porous and non-uniform microstructure which promotes corrosion, can be subject to grid growth, and cause high water loss in a battery. These features shorten the battery life. In addition, alloy additions, grain refiners, or both are often required to promote proper grid quality.

An alternative to producing book molded battery grids is to punch battery grids out of lead or lead alloy strip. Strip can be produced by casting, extruding, or rolling. Strip produced by certain methods can have virtually no porosity and require no additional grain refiners or alloy additions, and have a higher corrosion resistance and resistance to growth. Battery grids punched from strip can be produced at a high speed with minimal labor requirement. In certain processes, the strip can be continuously produced on a high-speed caster and continuously punched for quick production of battery grids. Thus, grids punched from strip offer several advantages over book molded grids.

However, continuously punched strip is subject to certain limitations of the punching process. The entire grid must be punched flat, so the outer borders are the same thickness as the internal current-carrying wires. In addition, punched wire widths are limited to being at least 35% of the thickness of the grid. Thus, in order to match the overall mass of the book molded grid (for comparable battery performance), the thickness of the punched grid would have to be less than the thickness of the outer borders of the book molded grid, but greater than the thickness of the internal wires of the book molded grid. Because the borders are the same thickness as the internal current-carrying wires, the amount of over-paste that can be applied to completely cover the internal wires is minimal. In addition, the volume of paste that can be applied to the grid cannot match that of the book molded grid, which means that the battery would have less reserve capacity. This is because the minimum width of the internal wires is limited in a punched grid, so the volume of void space in which paste can be applied is less overall than in a book molded grid. Alternatively, the punched grid can be made thicker (thereby permitting smaller wire widths) to increase the volume of void space in which paste can be applied. However, the greater thickness requires more lead or lead alloy, resulting in a higher material cost.

Both the industry standard book molded grids and the continuously punched grids offer several advantages and have several drawbacks.

US 3873366 discloses an electrode plate for a lead-acid storage battery which is composed of three thin grid units, each having its own active material. The characteristics of the cell can be controlled by varying the electrochemical properties of the different grid units. The lead alloy material of one grid unit may be different from the lead alloy material of another unit which can allow the use of some grids that are essentially free of antimony. The porosity of the active material on different grids can also be varied. The several grid units are joined together to provide a common electrical flag terminal which can be joined in a conventional manner to a pole bridge and thus be part of a plate set.

US 388960 discloses secondary-battery plates and a method of making such plates. The method involves stamping out by cutting and pressing from a sheet of metal two similar plates, each having beveled apertures, and attaching such plates together, so that a single plate with oppositely-beveled apertures is formed.

US 3453145 discloses a battery plate having an active material pasted on a grid laminated from at least three single grids. The grid conductors of one single grid offset with respect to the grid conductors of at least one of a single grid of the laminar grid. The plate is particularly useful as the positive a lead-acid motive power battery, but with other active materials the plate may also be used as a negative in the lead-acid battery.

US 1238211 relates to molds for storage battery grids and methods of making such molds.

US 2002/150822 discloses a reduced weight lead-acid battery incorporating light-weight negative battery plates each comprising an electrically-conductive open mesh grid formed from a strip of expanded, punched or cast metal, a pair of outer lower density support layers such as polymer or polymer-coated glass fibre or low density metal on each side of the central open grid, preferably arranged in a rectangular lattice, attached to each other through openings in the grid preferably by an acid-resistant adhesive, and an electrochemically-active paste saturating the void spaces thereof. An acid-resistant thermoplastic resin adhesive or ties or lugs are also disclosed which may be used to attach the support layers together.

### SUMMARY

In one aspect, there is provided a battery grid comprising a first grid member having opposite first and second side frame elements and opposite first and second end frame elements extending between the first and second side frame elements, the first grid member comprising a plurality of longitudinal wires extending between the first and second end frame elements at spaced locations between the first and second side frame elements, and a plurality of transverse wires extending between the first and second side frame elements at spaced locations between the first and second end frame elements; and a second grid member attached to the first grid member, the second grid member having opposite first and second side frame elements and opposite first and second end frame elements extending between the first and second side frame elements, the second grid member comprising a plurality of longitudinal wires extending between the first and second end frame elements at spaced locations between the first and second side frame elements, and a plurality of transverse wires extending between the first and second side frame elements at spaced locations between the first and second end frame elements; characterized in that the first grid member and the second grid member are identical, wherein one of the first and second grid members is turned over 180° about its transverse axis such that the transverse wires are offset from each other.

In another aspect, there is provided a method of making a battery grid having a thickness, the method comprising making a first grid member including first and second lug portions symmetrically arranged on either side of a transverse axis; making a second grid member including first and second lug portions symmetrically arranged on either side of a transverse axis; turning over one of the first and second grid members 180° about its transverse axis before the first and second grid members are attached to each other each other; superposing the first and second grid members, so that the first lug portion of the first grid member is aligned with the second lug portion of the second grid member and the second lug portion of the first grid member is aligned with the first lug portion of the second grid member; and attaching the first grid member and the second grid member together.

Other objects and features will be in part apparent and in part pointed out hereinafter.

### BRIEF DESCRIPTION OF THE DRAWINGS

FIG. 1 is a perspective of a battery grid including first and second grid members;
FIG. 2 is a front elevation of a battery grid member used in the battery grid of Fig. 1;
FIG. 3 is an exploded perspective of the battery grid of Fig. 1;
FIG. 4 is a perspective of another embodiment of a battery grid including first and second grid members;
FIG. 5 is a perspective of another embodiment of a battery grid including first and second grid members; and
FIG. 6 is a perspective of a lead acid battery including a battery grid having first and second grid members.

Corresponding reference characters indicate corresponding parts throughout the drawings.

### DETAILED DESCRIPTION

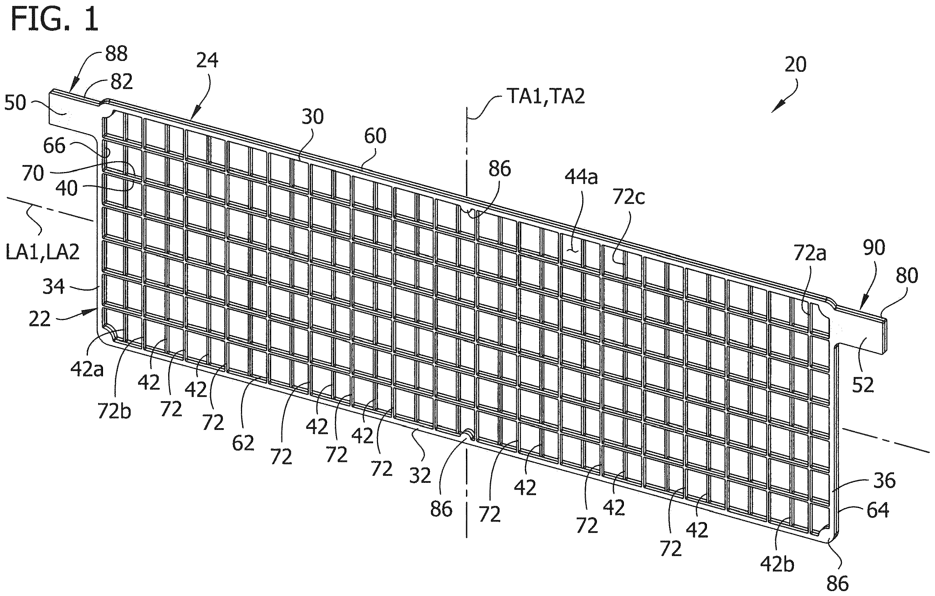

Referring to Figs. 1-3, a battery grid is generally indicated by reference number 20. The battery grid 20 includes a first grid member 22 and a second grid member 24. The first and second grid members 22, 24 are preferably made of a lead alloy and formed in a continuous process, which is described more fully hereinafter. As shown in the illustrated embodiments, the grid members 22, 24 are identical, but not symmetrical. The first grid member 22 and the second grid member 24 are attached together to form the battery grid 20.

Referring to Figs. 1-3, the first grid member 22 has a central longitudinal axis LA1 and a central transverse axis TA1 perpendicular to the longitudinal axis. The first grid member 22 includes a first side frame element 30 extending along a length of the grid member. The first side frame element 30 is substantially parallel to the longitudinal axis LA1. The first side frame element 30 at least partially defines an outer border of the first grid member 22. The first grid member 22 includes a second side frame element 32 extending along a length of the grid member. The second side frame element 32 is substantially parallel to the longitudinal axis LA1. The second side frame element 32 at least partially defines the outer border of the first grid member 22. The second side frame element 32 is substantially parallel to and spaced from the first side frame element 30. The first and second side frame elements 30, 32 are on opposite sides of the longitudinal axis LA1. The first grid member 22 includes a first end frame element 34 extending along a width of the grid member. The first end frame element 34 is substantially parallel to the transverse axis TA1. The first end frame element 34 at least partially defines the outer border of the first grid member 22. The first end frame element 34 is generally perpendicular to the first and second side frame elements 30, 32. The first end frame element 34 extends between the first and second side frame elements 30, 32. A second end frame element 36 extends along a width of the first grid member 22. The second end frame element 36 is substantially parallel to the transverse axis TA1. The second end frame element 36 at least partially defines the outer border of the first grid member 22. The second end frame element 36 is generally perpendicular to the first and second side frame elements 30, 32. The second end frame element 36 extends between the first and second side frame elements 30, 32 at a location spaced from the first end frame element 34. The second end frame element 36 is substantially parallel to and spaced from the first end frame element 34. The first and second end frame elements 34, 36 are on opposite sides of the transverse axis TA1.

Longitudinal wires 40 extend along a length of the first grid member 22. Each longitudinal wire 40 is substantially parallel to the longitudinal axis LA1. The longitudinal wires 40 are positioned between the first and second side frame elements 30, 32 at spaced locations. Each longitudinal wire 40 extends between the first end frame element 34 and the second end frame element 36. The longitudinal wires 40 are substantially parallel to and spaced from the first side frame element 30, the second side frame element 32, and each other. In the illustrated embodiment, the longitudinal wires 40 are equally spaced between the first and second side frame elements 30, 32. The longitudinal wires 40 are symmetrically positioned on either side of the longitudinal axis LA1. The longitudinal wires 40 each have substantially equal widths. It will be understood that the longitudinal wires 40 may have unequal spacing (not shown), and/or not be symmetrically positioned on either side of the longitudinal axis LA1 (not shown), and/or not have substantially equal widths, or have varying widths along their lengths.

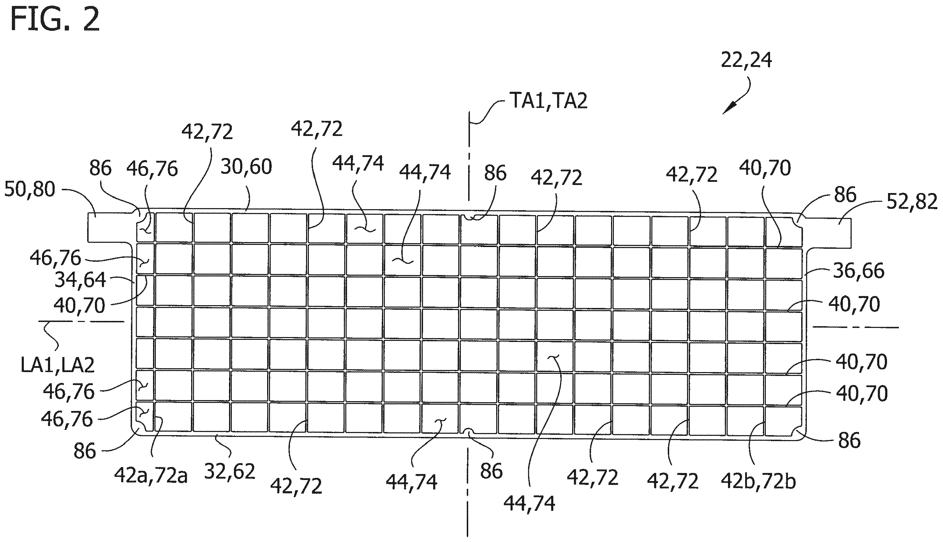

The first grid member 22 includes transverse wires 42 extending along a width of the grid member. Each transverse wire 42 is substantially parallel to the transverse axis TA1. The transverse wires 42 are positioned between the first and second end frame elements 34, 36 at spaced locations. Each transverse wire 42 extends between the first side frame element 30 and the second side frame element 32. The transverse wires 42 are substantially parallel to and spaced from the first end frame element 34, the second end frame element 36, and each other. In the illustrated embodiment, the transverse wires 42 are equally spaced from each other and have substantially equal widths. The transverse wires 42 are not symmetrically positioned on either side of the transverse axis TA1. As seen in Fig. 2, a first end transverse wire 42a is closest to the first end frame element 34. A second end transverse wire 42b is closest to the second end frame element 36. The first end transverse wire 42a is closer to the first end frame element 34 than the second end transverse wire 42b is to the second end frame element 36. Other configurations are within the scope of the present invention. It will be understood that the transverse wires 42 may have other than equidistant spacing. Moreover, it is within the scope of the present invention for the transverse wires 42 to be symmetrically positioned on either side of the transverse axis TA1. In addition, it is within the scope of the present invention for the transverse wires 42 to not have substantially equal widths, or to have varying widths along their lengths.

The external wires of the first grid member 22 (i.e., the first and second side frame elements 30, 32 and the first and second end frame elements 34, 36) have widths greater than the widths of the internal wires (i.e., the longitudinal wires 40 and the transverse wires 42). In other words, the wires defining the outer border of the first grid member 22 are wider than the wires within the outer border in order to conduct electricity and provide strength and rigidity to the first grid member. However, other configurations are within the scope of the present invention. For example, the external wires can have widths the same as or smaller than the widths of the internal wires. Alternatively, all of the wires of the first grid member can have substantially identical widths.

The first and second side frame elements 30, 32, the second end frame element 36, the longitudinal wires 40, and the transverse wires 42 define openings 44. The openings 44 are each generally the same size. The first end frame element 34, the first end transverse wire 42a, and the longitudinal wires 40 define openings 46. The openings 46 are smaller than the openings 44. Specifically, the openings 46 are smaller along a dimension extending parallel to the longitudinal axis LA1 than the openings 44. The openings 46 are smaller than the openings 44 because the first end transverse wire 42a is closer to the first end frame element 34 than the second end transverse wire 42b is to the second end frame element 36.

The first grid member 22 includes at least one lug portion. In the illustrated embodiment, a first lug portion 50 extends outward from the first end frame element 34. The first lug portion 50 is positioned adjacent the first side frame element 30. A second lug portion 52 extends outward from the second end frame element 36. The second lug portion 52 is positioned adjacent the first side frame element 30. The first and second lug portions 50, 52 are symmetrically arranged on either side of the transverse axis TA1. Other configurations (not shown) are within the scope of the present invention, such as a different number, configuration, or position of lug portions. For example and without limitation, the arrangement of the lug portions 50, 52 on the first grid member 22 may not be symmetrically arranged on either side of the transverse axis TA1. Moreover, the first grid member 22 could include only one lug portion. Still further, the first grid member 22 may have more than two lug portions 50, 52 and/or the lug portions may extend from a side frame element 30, 32.

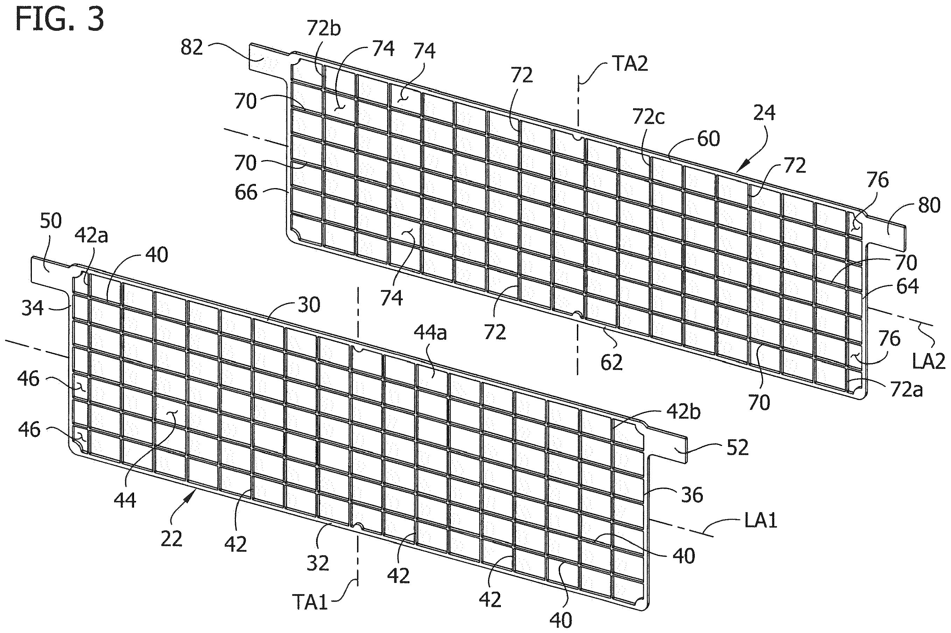

The second grid member 24 will now be described, and is best seen in Fig. 3. The second grid member 24 is identical to the first grid member 22, although other configurations are also envisaged. For example, a battery grid 20 including grid members that are not identical to each other. In the illustrated embodiment, the second grid member 24 is identical to the first grid member 22. The second grid member 24 has a central longitudinal axis LA2 and a central transverse axis TA2 perpendicular to the longitudinal axis. The second grid member 24 includes a first side frame element 60 extending along a length of the grid member. The first side frame element 60 is substantially parallel to the longitudinal axis LA2. The first side frame element 60 at least partially defines an outer border of the second grid member 24. The second grid member 24 includes a second side frame element 62 extending along a length of the grid member. The second side frame element 62 is substantially parallel to the longitudinal axis LA2. The second side frame element 62 at least partially defines the outer border of the second grid member 24. The second side frame element 62 is substantially parallel to and spaced from the first side frame element 60. The first and second side frame elements 60, 62 are on opposite sides of the longitudinal axis LA2. The second grid member 24 includes a first end frame element 64 extending along a width of the grid member. The first end frame element 64 is substantially parallel to the transverse axis TA2. The first end frame element 64 at least partially defines the outer border of the second grid member 24. The first end frame element 64 is generally perpendicular to the first and second side frame elements 60, 62. The first end frame element 64 extends between the first and second side frame elements 60, 62. A second end frame element 66 extends along a width of the second grid member 24. The second end frame element 66 is substantially parallel to the transverse axis TA2. The second end frame element 66 at least partially defines the outer border of the second grid member 24. The second end frame element 66 is generally perpendicular to the first and second side frame elements 60, 62. The second end frame element 66 extends between the first and second side frame elements 60, 62 at a location spaced from the first end frame element 64. The second end frame element 66 is substantially parallel to and spaced from the first end frame element 64. The first and second end frame elements 64, 66 are on opposite sides of the transverse axis TA2.

Longitudinal wires 70 extend along a length of the second grid member 24. Each longitudinal wire 70 is substantially parallel to the longitudinal axis LA2. The longitudinal wires 70 are positioned between the first and second side frame elements 60, 62 at spaced locations. Each longitudinal wire 70 extends between the first end frame element 64 and the second end frame element 66. The longitudinal wires 70 are substantially parallel to and spaced from the first side frame element 60, the second side frame element 62, and each other. In the illustrated embodiment, the longitudinal wires 70 are equally spaced between the first and second side frame elements 60, 62. The longitudinal wires 70 are symmetrically positioned on either side of the longitudinal axis LA2. The longitudinal wires 70 each have substantially equal widths. Other configurations (not shown) are within the scope of the present invention. For example and without limitation, the longitudinal wires 70 may have different spacings between each other, and/or they may not be symmetrically positioned on either side of the longitudinal axis LA2, and/or not have substantially equal widths, or having varying widths along their lengths.

The second grid member 24 includes transverse wires 72 extending along a width of the grid member. Each transverse wire 72 is substantially parallel to the transverse axis TA2. The transverse wires 72 are positioned between the first and second end frame elements 64, 66 at spaced locations. Each transverse wire 72 extends between the first side frame element 60 and the second side frame element 62. The transverse wires 72 are substantially parallel to and spaced from the first end frame element 64, the second end frame element 66, and each other. In the illustrated embodiment, the transverse wires 72 are equally spaced from each other and have substantially equal widths. The transverse wires 72 are not symmetrically positioned on either side of the transverse axis TA2. As seen in Fig. 2, a first end transverse wire 72a is closest to the first end frame element 64. A second end transverse wire 72b is closest to the second end frame element 66. The first end transverse wire 72a is closer to the first end frame element 64 than the second end frame element 72b is to the second end frame element 66. Other configurations (not shown) are within the scope of the present invention. For example and without limitation, the transverse wires 72 may not be equidistant from each other. Further, the transverse wires 72 may not be symmetrically positioned on either side of the transverse axis TA2. In addition, it is within the scope of the present invention for the transverse wires 72 to not have substantially equal widths, or to have varying widths along their length.

As seen in Fig. 2, the external wires of the second grid member 24 (i.e., the first and second side frame elements 60, 62 and the first and second end frame elements 64, 66) have widths greater than the widths of the internal wires (i.e., the longitudinal wires 70 and the transverse wires 72). In other words, the wires defining the outer border of the second grid member 24 are wider than the wires within the outer border to conduct electricity and provide strength and rigidity to the second grid member. However, other configurations are within the scope of the present invention. For example, the external wires can have widths the same as or smaller than the widths of the internal wires. Alternatively, all of the wires of the second grid member can have substantially identical widths.

The first and second side frame elements 60, 62, the second end frame element 66, the longitudinal wires 70, and the transverse wires 72 define openings 74. The openings 74 are each generally the same size. The first end frame element 64, the first end transverse wire 72a, and the longitudinal wires 70 define openings 76. The openings 76 are smaller than the openings 74. Specifically, the openings 76 are smaller along a dimension extending parallel to the longitudinal axis LA2 than the openings 74. The openings 76 are smaller than the openings 74 because the first end transverse wire 72a is closer to the first end frame element 64 than the second end transverse wire 72b is to the second end frame element 66.

Referring to Figs. 1-3, the second grid member 24 includes at least one lug portion. In the illustrated embodiment, a first lug portion 80 extends outward from the first end frame element 64. The first lug portion 80 is positioned adjacent the first side frame element 60. A second lug portion 82 extends outward from the second end frame element 66. The second lug portion 82 is positioned adjacent the first side frame element 60. The first and second lug portions 80, 82 are symmetrically arranged on either side of the transverse axis TA2. Other configurations (not shown) are within the scope of the present invention, such as a different number, configuration, or position of lug portions. For example and without limitation, the first and second lug portions 80, 82 may not be symmetrically arranged on either side of the transverse axis TA1, and/or one or more lug portions may extend from the side frame elements 60, 62. Still further, the second grid member 24 may have only one lug portion and/or may have more than two lug portions.

The first and second grid members 22, 24 can be formed in a continuous operation in which the configuration of the grid members, including specifically the wires 40, 42, 70, 72, is formed by punching. The grid members 22, 24 are then attached together to form the battery grid 20. The first and second grid members 22, 24 can be attached in any suitable manner, such as adhesive or welding. Preferably, the first and second grid members 22, 24 are attached by spot welding. The first and second grid members 22, 24 can include structure to facilitate attachment. As seen in Fig. 2, each of the first and second grid members 22, 24 includes projections 86 extending inward from the external wires. The projections 86 provide locations for spot welding. The projections 86 are symmetrically arranged about the transverse axis TA1, TA2. Other configurations, positions, and structure for facilitating attachment of the grid members are within the scope of the present invention. It is understood that the battery grid 20 may include more than two grid members attached to each other to form the battery grid.

The grid 20 can be formed in a continuous process in which identical grid members 22, 24 are made. To form the final grid 20, one of the grid members 22, 24 is turned over 180° about its transverse axis before the grid members are attached to each other to form the battery grid 20. As illustrated, the second grid member 24 is flipped about the transverse axis TA2 prior to attachment to the first grid member 22. Because the projections 86 are symmetrically arranged about the transverse axes TA1, TA2, the projections remain in alignment for spot welding of the grid members 22, 24. For simplicity of illustration, the longitudinal axes LA1, LA2 and the transverse axes TA1, TA2 of the grid members 22, 24 are shown as being coincident in the assembled grid 20. The first and second grid members 22, 24 are attached to each other such that the first side frame element 30 of the first grid member is aligned with the first side frame element 60 of the second grid member. The second side frame element 32 of the first grid member 22 is aligned with the second side frame element 62 of the second grid member 24. The first end frame element 34 of the first grid member 22 is aligned with the second end frame element 66 of the second grid member 24. The second end frame element 36 of the first grid member 22 is aligned with the first end frame element 64 of the second grid member 24. The side frame elements 30, 32, 60, 62 and end frame elements 34, 36, 64, 66 form an outer border of the battery grid 20.

Referring still to Figs. 1 and 3, the first lug portion 50 of the first grid member 22 is aligned with the second lug portion 82 of the second grid member 24. When the grid members 22, 24 are attached, the lug portions 50, 82 form a first lug 88 of the battery grid 20. The second lug portion 52 of the first grid member 22 is aligned with the first lug portion 80 of the second grid member 24. When the grid members 22, 24 are attached, the lug portions 52, 80 form a second lug 90 of the battery grid 20. Because the lug portions 50, 52 and 80, 82 are symmetrically arranged about the transverse axes TA1, TA2, respectively, the lug portions align with each other to form lugs 88, 90 when one of the grid members 22, 24 is turned over about the transverse axis.

Referring to Fig. 1, the longitudinal wires 40 of the first grid member 22 are aligned with the longitudinal wires 70 of the second grid member 24. The transverse wires 42 of the first grid member 22 are offset or staggered from the transverse wires 72 of the second grid member 24. Because the transverse wires 42, 72 are not symmetric about the respective transverse axes TA1, TA2, the transverse wires are offset from each other when one of the grid members is turned over about its transverse axis. Because the transverse wires 42, 72 are offset from each other when the grid members 22, 24 are attached, each grid member can have fewer and thinner transverse wires as compared to a monolithic battery grid. Fewer transverse wires in each grid member 22, 24 means that the openings 44, 74 can be larger and can receive more battery paste. The offset transverse wire of the other grid member provides support for battery paste in each opening 44, 74. Battery paste is brittle and requires support from the grid wires to withstand vibrations during use of a battery made with the pasted grid. The grid wires are preferably spaced sufficiently to ensure paste locking (i.e., battery paste support). For example, as seen in Fig. 1, battery paste (not shown) received in opening 44a of the first grid member 22 would be supported by transverse wire 72c of the second grid member 24.

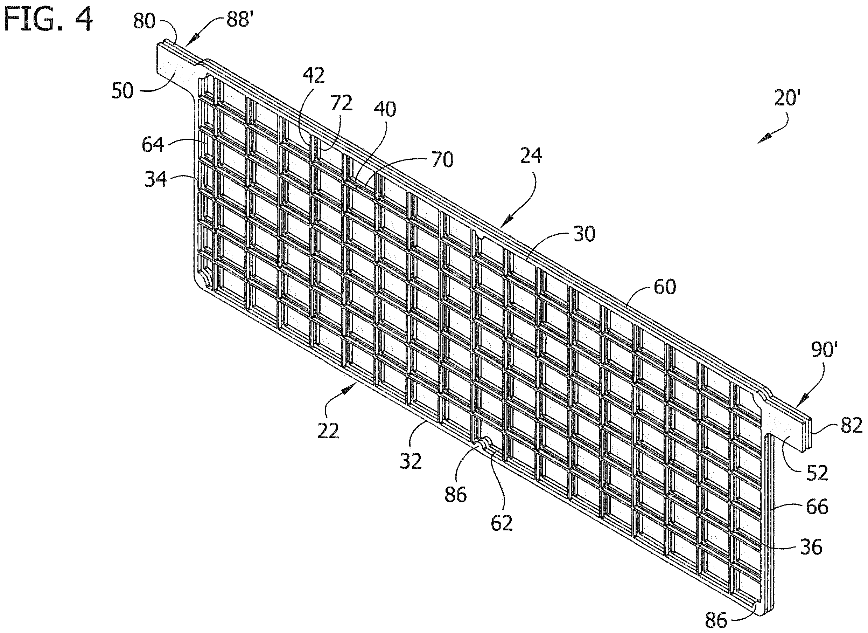

In an alternative disclosure illustrated in Fig. 4, which is not part of the invention, the grid members 22, 24 can be attached to each other without turning over one of the grid members to form a battery grid 20'. The first and second grid members 22, 24 are attached in any suitable manner, such as adhesive or welding. Preferably, the first and second grid members are attached by spot welding, such as by spot welding at the projections 86. The first and second grid members 22, 24 are attached to each other such that the first side frame element 30 of the first grid member is aligned with the first side frame element 60 of the second grid member. The second side frame element 32 of the first grid member 22 is aligned with the second side frame element 62 of the second grid member 24. The first end frame element 34 of the first grid member 22 is aligned with the first end frame element 64 of the second grid member 24. The second end frame element 36 of the first grid member 22 is aligned with the second end frame element 66 of the second grid member 24. The side frame elements 30, 32, 60, 62 and end frame elements 34, 36, 64, 66 form an outer border of the battery grid 20. The first lug portion 50 of the first grid member 22 is aligned with the first lug portion 80 of the second grid member 24. When the grid members 22, 24 are attached, the lug portions 50, 80 form a first lug 88' of the battery grid 20'. The second lug portion 52 of the first grid member 22 is aligned with the second lug portion 82 of the second grid member 24. When the grid members 22, 24 are attached, the lug portions 52, 82 form a second lug 90' of the battery grid 20'. The longitudinal wires 40 of the first grid member 22 are aligned with the longitudinal wires 70 of the second grid member 24. The transverse wires 42 of the first grid member 22 are aligned with the transverse wires 72 of the second grid member 24.

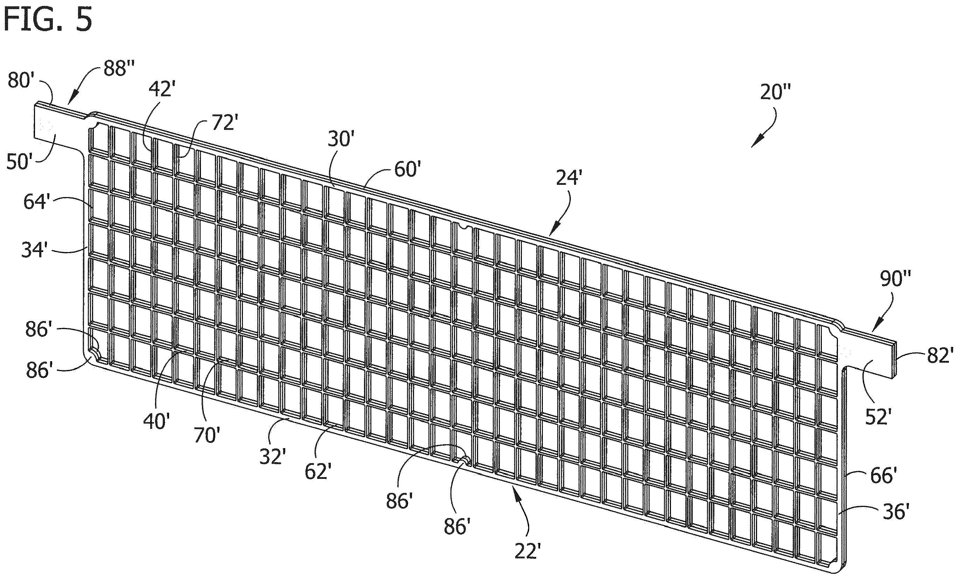

In an alternative disclosure illustrated in Fig. 5, which is not part of the invention, grid members 22', 24' are attached to each other without turning over one of the grid members to form a battery grid 20". The first and second grid members 22', 24' are attached in any suitable manner, such as adhesive or welding. Preferably, the first and second grid members are attached by spot welding, such as by spot welding at the projections 86'. Each of the first and second grid members 22', 24' includes additional transverse wires 42', 72' as compared to the grid members 22, 24 described above. This is to ensure paste locking (i.e., battery paste support), as there is no offset transverse wire on one grid member to provide support to paste on the other grid member. The first and second grid members 22', 24' are attached to each other such that the first side frame element 30' of the first grid member is aligned with the first side frame element 60' of the second grid member. The second side frame element 32' of the first grid member 22' is aligned with the second side frame element 62' of the second grid member 24'. The first end frame element 34' of the first grid member 22' is aligned with the first end frame element 64' of the second grid member 24'. The second end frame element 36' of the first grid member 22' is aligned with the second end frame element 66' of the second grid member 24'. The side frame elements 30', 32', 60', 62' and end frame elements 34', 36', 64', 66' form an outer border of the battery grid 20". The first lug portion 50' of the first grid member 22' is aligned with the first lug portion 80' of the second grid member 24'. When the grid members 22', 24' are attached, the lug portions 50', 80' form a first lug 88" of the battery grid 20". The second lug portion 52' of the first grid member 22' is aligned with the second lug portion 82' of the second grid member 24'. When the grid members 22', 24' are attached, the lug portions 52', 82' form a second lug 90" of the battery grid 20". The longitudinal wires 40' of the first grid member 22' are aligned with the longitudinal wires 70' of the second grid member 24'. The transverse wires 42' of the first grid member 22' are aligned with the transverse wires 72' of the second grid member 24'.

The grid members 22, 24, 22', 24' can be formed from any suitable material and by any suitable method. Preferably, the grid members 22, 24, 22', 24' are punched grids. The grid members 22, 24, 22', 24' can be formed from any suitable material, such as lead, lead alloys, carbon, carbon alloys, zinc, zinc alloys, or zinc-silver alloys. Examples of suitable lead alloys include, but are not limited to: antimony-lead alloys; calcium-lead alloys; and lead alloys including optional alloying elements such as tin, silver, arsenic, copper, selenium, tellurium, cadmium, bismuth, magnesium, lithium, sulfur, barium, zinc, iridium, or phosphorous. For example, cast, extruded, or rolled lead or lead alloy strip material can be punched (e.g., with a punch press, rotary puncher, or other die punching equipment) to form the grid members 22, 24, 22', 24'. For speed of operation, preferably lead or lead alloy strip is continuously formed and continuously punched to form the grid members 22, 24, 22', 24'. Examples of methods and apparatuses for continuously casting or extruding lead and lead alloy strip are disclosed in U.S. Patent 5,462,109; U.S. Patent 6,797,403; and U.S. Patent 8,701,745. Examples of methods and apparatuses for continuously punching lead and lead alloy strip are disclosed in U.S. Patent 7,066,066; U.S. Patent 7,380,484; and U.S. Publication 2007/0193009.

Preferably, each grid member 22, 24, 22', 24' has a thickness about half the thickness of the assembled battery grid 20, 20', 20". The width of the wires in a punched grid is limited by the thickness of the wires. In general, the width of a wire must be at least 35% of the thickness of the wire. Thus, by punching each grid member 22, 24, 22', 24' separately with a thickness about half the thickness of the battery grid 20, 20', 20", the width of the wires of each grid member can be significantly smaller than the width of the wires of a conventional punched battery grid formed as one piece. For example, in a conventional punched battery grid formed as one piece and having a thickness of about 0.180 inches (4.572 mm), the minimum width of a wire in that grid is at least about 35% of the thickness, or about 0.063 inches (1.6002 mm). In comparison, in a battery grid 20, 20', 20" formed from two grid members 22, 24, 22', 24' each having a thickness of 0.090 inches (2.286 mm) for a total battery grid thickness of 0.180 inches (4.572 mm), the minimum width of a wire in that grid is at least about 35% of the thickness of the grid members, or about 0.0315 inches (0.8001 mm). Therefore, in a battery grid having a thickness of about 0.180 inches (4.572 mm), the minimum width of the wires in the battery grid 20, 20', 20" formed from two grid members 22, 24, 22', 24' (about 0.0315 inches (0.8001 mm)) is about half the minimum width of the wires in a conventional punched battery grid (about 0.063 inches (1.6002 mm)). It is understood that other configurations are within the scope of the present invention, such as grid members having a thickness smaller than about half the thickness of the assembled battery grid, or one grid member having a thickness greater than about half the thickness of the assembled battery grid.

The battery grid 20, 20', 20" as described above offers several advantages over known battery grids. The battery grid 20, 20', 20" is punched from strip, which permits continuous production. Thus, the battery grid 20, 20', 20" can be produced at a high speed and continuously, thereby offering an advantage over book molded grids which have a slow cycle time and low production rate per machine. Book molded grids typically have high porosity, which increases the potential for corrosion and weight loss over time. In addition, alloy additions and grain refiners are often necessary to promote proper finished grid quality and attributes. Using strip to form the grid members 22, 24, 22', 24' can reduce the porosity of the grid members and reduce the need for grain refiners and alloy additions. In addition, the battery grid 20, 20', 20" overcomes the limitations of current continuously produced battery grids. Specifically, by forming two grid members and attaching them together, the width of each of the longitudinal and transverse wires 40, 40' 70, 70' 42, 42', 72, 72' can be thinner than the wires of a conventional punched battery grid. The battery grid 20, 20', 20" offers the advantages of a continuously punched grid, but overcomes the limitations of current continuously punched grids. In overcoming these limitations, the battery grid 20, 20', 20" can have the desirable features of a book molded battery grid. Thus, the battery grid 20, 20', 20" formed from two grid members 22, 24, 22', 24' attached to each other, offers both the advantages of a continuously punched grid and the performance capabilities of a book molded grid.

Table 1 below shows an illustrative comparison of battery grids having a thickness of 0.180 inches (4.572 mm). Table 1 includes comparative data showing a book molded grid having a thickness of 0.180 inches (4.572 mm), a punched grid having a thickness of 0.180 inches (4.572 mm), a battery grid 20' as described above formed from two grid members each having a thickness of 0.090 inches (2.286 mm) for a total battery grid thickness of 0.180 inches (4.572 mm), a battery grid 20 as described above formed from two grid members each having a thickness of 0.090 inches (2.286 mm) for a total battery grid thickness of 0.180 inches (4.572 mm), and a battery grid 20" as described above formed from two grid members each having a thickness of 0.090 inches (2.286 mm) for a total battery grid thickness of 0.180 inches (4.572 mm). As seen in Table 1, based on the limitations of continuously punching battery grids, a battery grid continuously formed as one piece has a total grid weight about 90.7% higher than the total grid weight of the book molded grid. Thus, the continuously formed battery grid requires more material than a book molded grid, which increases costs. The continuously formed battery grid also has about 16.7% less volume of paste as compared to the book molded grid. Less paste volume means the continuously produced grid has less reserve capacity than the book molded grid. Although the continuously punched grid can be made relatively quickly compared to the book molded grid, the trade-off is a higher material cost and a reduction in paste volume. In comparison, the battery grid 20 formed from two grid members has approximately the same weight of material as the book molded grid (about a 0.0% reduction or increase), and about the same paste volume as the book molded grid (about a 0.1% increase). The battery grid 20 thus offers the quick production of the continuously punched grid without sacrificing the performance capabilities of the industry standard book molded grid or increasing the material cost. Likewise, the battery grid 20' formed from two grid members has approximately the same weight of material as the book molded grid (about a 0.0% reduction or increase), and about the same paste volume as the book molded grid (about a 0.1% increase). The battery grid 20' thus offers the quick production of the continuously punched grid without increasing the material cost, although the wires may not be optimally spaced for paste locking. In addition, the battery grid 20" formed from two grid members has about an 18.4% increase in total grid weight and about a 3.3% reduction in paste volume, a significant improvement as compared to the continuously punched grid. As seen in Table 1, the battery grid 20" requires additional transverse wires to support the battery paste as compared to the battery grid 20 with offset transverse wires or the battery grid 20' with larger paste openings. Thus, battery grid 20" does not offer the same level of improvement as the battery grid 20, but still offers a significant improvement over current continuously punched grids. The battery grid 20" thus offers the quick production of the continuously punched grid with fewer limitations.

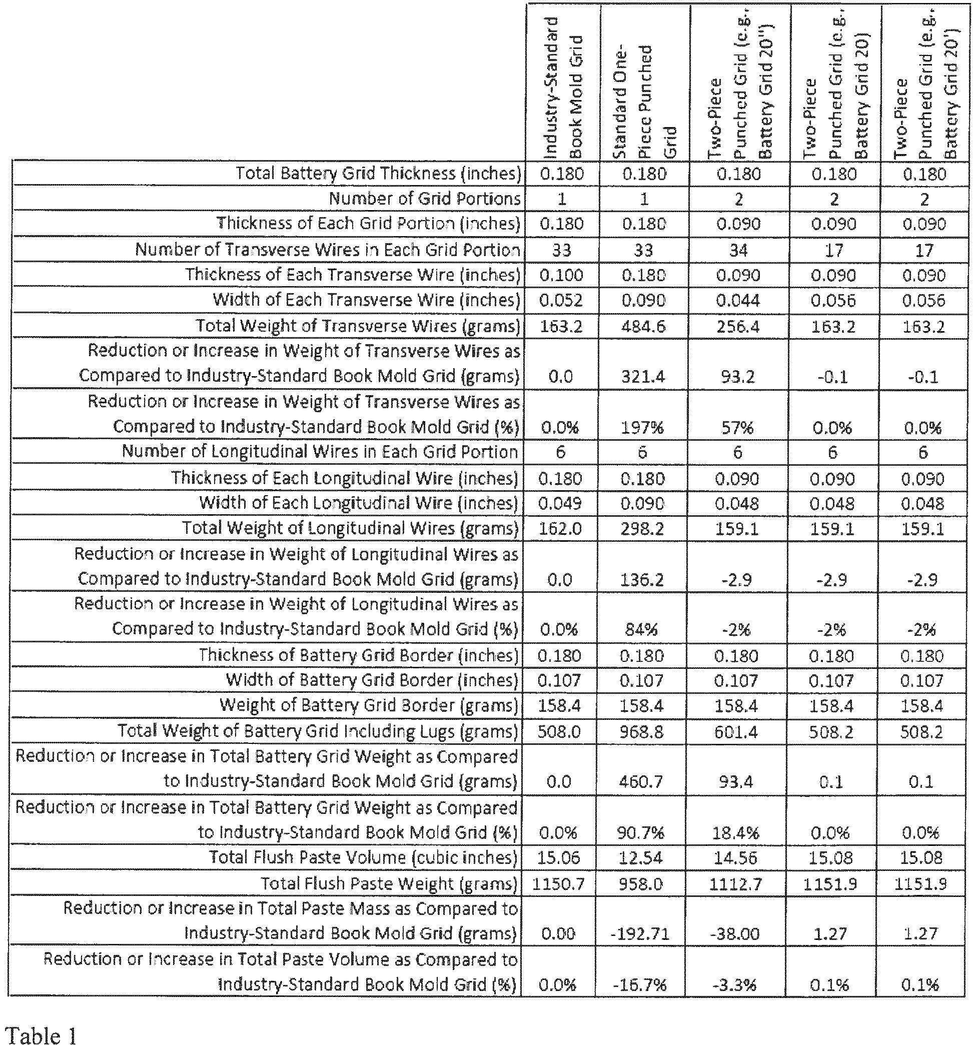

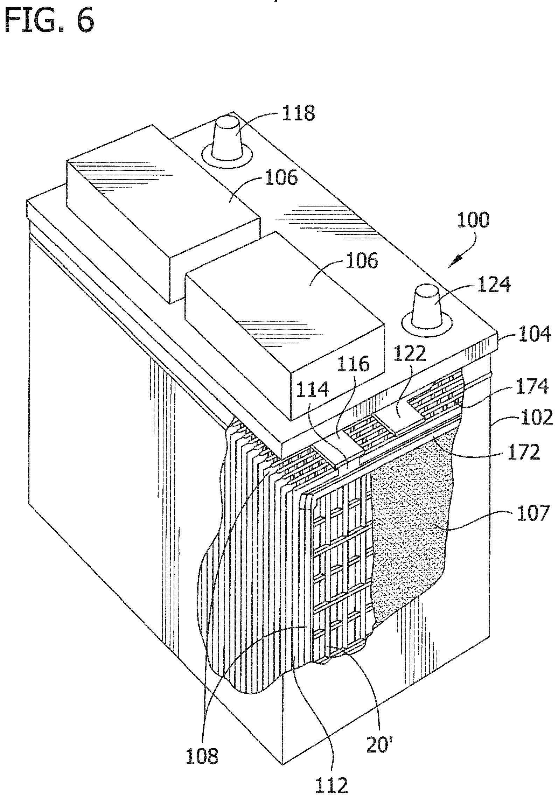

The battery grids 20, 20', 20" as described above are suitable for use in a lead acid battery, such as the battery 100 shown in Fig. 6. As illustrated in Fig. 6, the battery 100 includes a plastic casing 102 with a cover 104 including vent covers 106 and containing battery electrode plates 108. The plates 108 include a battery grid 20' pasted with battery paste 107. The plates 108 are stacked vertically as negative plates 172 alternating with positive plates 174 separated from one another by plate separators 112. The lugs 114 of the negative plates 172 are interconnected by a metal header 116 to a negative battery post 118, and the lugs (not shown) of the positive plates 174 are interconnected by a metal header 122 to a positive battery post 124. Sulphuric acid solution (not shown) is added in an amount to submerge the battery plates for operating the battery. It is understood that the battery grids 20 can be used in batteries having different configurations within the scope of the present invention.

In one exemplary method, a battery grid 20, 20', 20" is formed by attaching first and second grid members 22, 24, 22', 24' together. The grid members 22, 24, 22', 24' are attached to each other by spot welding or other suitable method.

In another exemplary method, a battery grid 20 is formed by attaching first and second grid members 22, 24 together. One of the first and second grid members 22, 24 is flipped or turned over about its transverse axis such that the transverse wires 42, 72 of the first and second grid members are offset from each other. The first and second grid members are attached to each other by spot welding or other suitable method.

In another exemplary method, first and second grid members 22, 24, 22', 24' are punched from strip. The strip can be continuously cast, or produced by any other suitable method. The first and second grid members 22, 24, 22', 24' are attached to each other to form a battery grid 20, 20', 20". One of the first and second grid members 22, 24 is turned over 180° about its transverse axis TA1, TA2 such that the transverse wires 42, 72 are offset from each other. The battery grid 20, 20', 20" is then pasted.

Other statements of the disclosure are set forth below.
A. A battery grid comprising:
   a first grid member having opposite first and second side frame elements and opposite first and second end frame elements extending between the first and second side frame elements; and
   a second grid member attached to the first grid member, the second grid member having opposite first and second side frame elements and opposite first and second end frame elements extending between the first and second side frame elements.
A1. The battery grid as set forth in A, wherein the first grid member further comprises:
   a plurality of longitudinal wires extending between the first and second end frame elements at spaced locations between the first and second side frame elements; and
   a plurality of transverse wires extending between the first and second side frame elements at spaced locations between the first and second end frame elements.
A2. The battery grid as set forth in A1, wherein the second grid member further comprises:
   a plurality of longitudinal wires extending between the first and second end frame elements at spaced locations between the first and second side frame elements; and
   a plurality of transverse wires extending between the first and second side frame elements at spaced locations between the first and second end frame elements.
A3. The battery grid as set forth in A1, wherein the second grid member is attached to the first grid member such that the longitudinal wires of the first grid member are aligned with the longitudinal wires of the second grid member.
A4. The battery grid as set forth in A3, wherein the second grid member is attached to the first grid member such that the transverse wires of the second grid member are offset from the transverse wires of the first grid member.
A5. The battery grid as set forth in A3, wherein the second grid member is attached to the first grid member such that the transverse wires of the first grid member are aligned with the transverse wires of the second grid member.
A6. The battery grid as set forth in A2, wherein the transverse wires of the first grid member are asymmetrically arranged about a central transverse axis of the first grid member, and the transverse wires of the second grid member are asymmetrically arranged about a central transverse axis of the second grid member.
A7. A lead acid battery comprising a battery grid as set forth in claim A.
A8. The battery grid as set forth in A, wherein the first grid member and the second grid member are not identical.
A9. The battery grid as set forth in A, wherein each of the first and second grid members comprises at least one lug portion.
A10. The battery grid as set forth in A9, wherein each of the first and second grid members comprises two lug portions symmetrically arranged about a central transverse axis of the respective grid member.

## Claims

1. A two-piece punched battery grid (20) comprising:
a first grid member (22) having opposite first and second side frame elements (30, 32) and opposite first and second end frame elements (34, 36) extending between the first and second side frame elements, the first grid member comprising a plurality of longitudinal wires (40) extending between the first and second end frame elements at spaced locations between the first and second side frame element, and a plurality of transverse wires (42) extending between the first and second side frame elements at spaced locations between the first and second end frame elements; and
a second grid member (24) attached to the first grid member, the second grid member having opposite first and second side frame elements (60, 62) and opposite first and second end frame elements (64, 66) extending between the first and second side frame elements, the second grid member comprising a plurality of longitudinal wires (70) extending between the first and second end frame elements at spaced locations between the first and second side frame element, and a plurality of transverse wires (72) extending between the first and second side frame elements at spaced locations between the first and second end frame elements;
**characterized in that** the first grid member and the second grid member are identical, the first end frame element of the first grid member being superposed and aligned with the second end frame element of the second grid member and the second end frame element of the first grid member being superposed and aligned with the first end frame element of the second grid member such that the transverse wires of the first and second grid members are offset from each other.

2. The battery grid as set forth in claim 1, wherein the second grid member is attached to the first grid member such that the first and second side frame elements of the first grid member are aligned with the first and second side frame elements, respectively, of the second grid member.

3. The battery grid as set forth in claim 1, wherein the second grid member is attached to the first grid member such that the first end frame element of the first grid member is aligned with the second end frame element of the second grid member and the second end frame element of the first grid member is aligned with the first end frame element of the second grid member.

4. The battery grid as set forth in claim 1, wherein the second grid member is attached to the first grid member by spot welding.

5. The battery grid as set forth in claim 1, wherein each of the first and second grid members comprises at least one lug portion (50, 52).

6. A method of making a two-piece punched battery grid (20) having a thickness, the method comprising:
making a first grid member (22) having opposite first and second side frame elements (30, 32) and opposite first and second end frame elements (34, 36) extending between the first and second side frame elements, the first grid member comprising a plurality of longitudinal wires (40) extending between the first and second end frame elements at spaced locations between the first and second side frame element, and a plurality of transverse wires (42) extending between the first and second side frame elements at spaced locations between the first and second end frame elements;
making a second grid member (24) identical to the first grid member, the second grid member having opposite first and second side frame elements (60, 62) and opposite first and second end frame elements (64, 66) extending between the first and second side frame elements, the second grid member comprising a plurality of longitudinal wires (70) extending between the first and second end frame elements at spaced locations between the first and second side frame element, and a plurality of transverse wires (72) extending between the first and second side frame elements at spaced locations between the first and second end frame elements;
turning over one of the first and second grid members 180° about its transverse axis (TA1, TA2) such that transverse wires (42, 72) of the grid members are offset from each other;
superposing the first and second grid members; and
attaching the first grid member and the second grid member together.

7. The method as set forth in claim 6, wherein making a first grid member comprises making a first grid member having a thickness about half of the thickness of the battery grid, and making a second grid member comprises making a second grid member having a thickness about half of the thickness of the battery grid.

8. The method as set forth in claim 6, wherein attaching the first grid member and the second grid member together comprises welding the first and second grid members to each other.

9. The method as set forth in claim 6, wherein making a first grid member comprises punching the first grid member from lead alloy strip, and making the second grid member comprises punching the second grid member from lead alloy strip.

10. The method as set forth in claim 9, further comprising continuously casting lead alloy strip.

11. The method as set forth in claim 6 wherein making the first grid member comprises positioning the transverse wires so that they are not symmetrical about a transverse axis of the first grid member.

12. The method as set forth in claim 11 wherein making the second grid member comprises positioning the transverse wires so that they are not symmetrical about a transverse axis of the second grid member.

## Patentansprüche

1. Gestanztes Batteriegitter (20) aus zwei Stücken, umfassend:
ein erstes Gitterteil (22), das ein erstes und ein zweites Seitenrahmenelement (30, 32), die sich gegenüberliegen, und ein erstes und ein zweites Endrahmenelement (34, 36), die sich gegenüberliegen und sich zwischen dem ersten und dem zweiten Seitenrahmenelement erstrecken, aufweist, wobei das erste Gitterteil eine Vielzahl von längsverlaufenden Drähten (40), die sich an beabstandeten Stellen zwischen dem ersten und dem zweiten Seitenrahmenelement zwischen dem ersten und dem zweiten Endrahmenelement erstrecken, und eine Vielzahl von querverlaufenden Drähten (42), die sich an beabstandeten Stellen zwischen dem ersten und dem zweiten Endrahmenelement zwischen dem ersten und dem zweiten Seitenrahmenelement erstrecken, umfasst; und
ein zweites Gitterteil (24), das an dem ersten Gitterteil befestigt ist, wobei das zweite Gitterteil ein erstes und ein zweites Seitenrahmenelement (60, 62), die sich gegenüberliegen, und ein erstes und ein zweites Endrahmenelement (64, 66), die sich gegenüberliegen und sich zwischen dem ersten und dem zweiten Seitenrahmenelement erstrecken, aufweist, wobei das zweite Gitterteil eine Vielzahl von längsverlaufenden Drähten (70), die sich an beabstandeten Stellen zwischen dem ersten und dem zweiten Seitenrahmenelement zwischen dem ersten und dem zweiten Endrahmenelement erstrecken, und eine Vielzahl von querverlaufenden Drähten (72), die sich an beabstandeten Stellen zwischen dem ersten und dem zweiten Endrahmenelement zwischen dem ersten und dem zweiten Seitenrahmenelement erstrecken, umfasst;
**dadurch gekennzeichnet, dass** das erste Gitterteil und das zweite Gitterteil identisch sind, wobei das erste Endrahmenelement des ersten Gitterteils von dem zweiten Endrahmenelement des zweiten Gitterteils überlagert und nach diesem ausgerichtet ist und das zweite Endrahmenelement des ersten Gitterteils von dem ersten Endrahmenelement des zweiten Gitterteils überlagert und nach diesem ausgerichtet ist, sodass die querverlaufenden Drähte des erste und des zweiten Gitterteils voneinander versetzt sind.

2. Batteriegitter nach Anspruch 1, wobei das zweite Gitterteil an dem ersten Gitterteil befestigt ist, sodass das erste und das zweite Seitenrahmenelement des ersten Gitterteils nach dem ersten bzw. dem zweiten Seitenrahmenelement des zweiten Gitterteils ausgerichtet sind.

3. Batteriegitter nach Anspruch 1, wobei das zweite Gitterteil an dem ersten Gitterteil befestigt ist, sodass das erste Endrahmenelement des ersten Gitterteils nach dem zweiten Endrahmenelement des zweiten Gitterteils ausgerichtet ist und das zweite Endrahmenelement des ersten Gitterteils nach dem ersten Endrahmenelement des zweiten Gitterteils ausgerichtet ist.

4. Batteriegitter nach Anspruch 1, wobei das zweite Gitterteil durch Punktschweißen an dem ersten Gitterteil befestigt ist.

5. Batteriegitter nach Anspruch 1, wobei jedes von dem ersten und dem zweiten Gitterteil mindestens einen Vorsprungsabschnitt (50, 52) umfasst.

6. Verfahren zum Herstellen eines gestanzten Batteriegitters (20) aus zwei Stücken mit einer Dicke, wobei das Verfahren Folgendes umfasst:
Herstellen eines ersten Gitterteils (22), das ein erstes und ein zweites Seitenrahmenelement (30, 32), die sich gegenüberliegen, und ein erstes und ein zweites Endrahmenelement (34, 36), die sich gegenüberliegen und sich zwischen dem ersten und dem zweiten Seitenrahmenelement erstrecken, aufweist, wobei das erste Gitterteil eine Vielzahl von längsverlaufenden Drähten (40), die sich an beabstandeten Stellen zwischen dem ersten und dem zweiten Seitenrahmenelement zwischen dem ersten und dem zweiten Endrahmenelement erstrecken, und eine Vielzahl von querverlaufenden Drähten (42), die sich an beabstandeten Stellen zwischen dem ersten und dem zweiten Endrahmenelement zwischen dem ersten und dem zweiten Seitenrahmenelement erstrecken, umfasst;
Herstellen eines zweiten Gitterteils (24), das mit dem ersten Gitterteil identisch ist, wobei das zweite Gitterteil ein erstes und ein zweites Seitenrahmenelement (60, 62), die sich gegenüberliegen, und ein erstes und ein zweites Endrahmenelement (64, 66), die sich gegenüberliegen und sich zwischen dem ersten und dem zweiten Seitenrahmenelement erstrecken, aufweist, wobei das zweite Gitterteil eine Vielzahl von längsverlaufenden Drähten (70), die sich an beabstandeten Stellen zwischen dem ersten und dem zweiten Seitenrahmenelement zwischen dem ersten und dem zweiten Endrahmenelement erstrecken, und eine Vielzahl von querverlaufenden Drähten (72), die sich an beabstandeten Stellen zwischen dem ersten und dem zweiten Endrahmenelement zwischen dem ersten und dem zweiten Seitenrahmenelement erstrecken, umfasst;
Umdrehen eines von dem ersten und dem zweiten Gitterteil um 180° um seine Querachse (TA1, TA2), sodass die querverlaufenden Drähte (42, 72) der Gitterteile voneinander versetzt sind;
Überlagern des ersten und des zweiten Gitterteils; und
Befestigen des ersten Gitterteils und des zweiten Gitterteils aneinander.

7. Verfahren nach Anspruch 6, wobei das Herstellen eines ersten Gitterteils das Herstellen eines ersten Gitterteils mit einer Dicke von etwa der Hälfte der Dicke des Batteriegitters umfasst und das Herstellen eines zweiten Gitterteils das Herstellen eines zweiten Gitterteils mit einer Dicke von etwa der Hälfte der Dicke des Batteriegitters umfasst.

8. Verfahren nach Anspruch 6, wobei das Befestigen des ersten Gitterteils und des zweiten Gitterteils aneinander das Zusammenschweißen des ersten und des zweiten Gitterteils umfasst.

9. Verfahren nach Anspruch 6, wobei das Herstellen eines ersten Gitterteils das Stanzen des ersten Gitterteils aus einem Bleilegierungsband umfasst und das Herstellen des zweiten Gitterteils das Stanzen des zweiten Gitterteils aus einem Bleilegierungsband umfasst.

10. Verfahren nach Anspruch 9, ferner umfassend das Stranggießen eines Bleilegierungsbands.

11. Verfahren nach Anspruch 6, wobei das Herstellen des ersten Gitterteils das Positionieren der querverlaufenden Drähte, sodass sie um eine Querachse des ersten Gitterteils nicht symmetrisch sind, umfasst.

12. Verfahren nach Anspruch 11, wobei das Herstellen des zweiten Gitterteils das Positionieren der querverlaufenden Drähte, sodass sie um eine Querachse des zweiten Gitterteils nicht symmetrisch sind, umfasst.

## Revendications

1. Grille de batterie poinçonnée en deux parties (20), comprenant :
un premier élément de grille (22) ayant des premier et second éléments de structure latérale (30, 32) opposés et des premier et second éléments de structure extrême (34, 36) opposés s'étendant entre les premier et second éléments de structure latérale, le premier élément de grille comprenant une pluralité de fils longitudinaux (40) s'étendant entre les premier et second éléments de structure extrême à des emplacements espacés entre les premier et second éléments de structure latérale, et une pluralité de fils transversaux (42) s'étendant entre les premier et second éléments de structure latérale à des emplacements espacés entre les premier et second éléments de structure extrême ; et
un second élément de grille (24) fixé au premier élément de grille, le second élément de grille ayant des premier et second éléments de structure latérale (60, 62) opposés et des premier et second éléments de structure extrême (64, 66) opposés s'étendant entre les premier et second éléments de structure latérale, le second élément de grille comprenant une pluralité de fils longitudinaux (70) s'étendant entre les premier et second éléments de structure extrême à des emplacements espacés entre les premier et second éléments de structure latérale, et une pluralité de fils transversaux (72) s'étendant entre les premier et second éléments de structure latérale à des emplacements espacés entre les premier et second éléments de structure extrême ;
la grille de batterie étant **caractérisée en ce que** le premier élément de grille et le second élément de grille sont identiques, le premier élément de structure extrême du premier élément de grille étant superposé au second élément de structure extrême du second élément de grille et aligné avec celui-ci, et le second élément de structure extrême du premier élément de grille étant superposé au premier élément de structure extrême du second élément de grille et aligné avec celui-ci de sorte que les fils transversaux des premier et second éléments de grille soient décalés les uns par rapport aux autres.

2. Grille de batterie selon la revendication 1, dans laquelle le second élément de grille est fixé au premier élément de grille de sorte que les premier et second éléments de structure latérale du premier élément de grille soient respectivement alignés avec les premier et second éléments de structure latérale du second élément de grille.

3. Grille de batterie selon la revendication 1, dans laquelle le second élément de grille est fixé au premier élément de grille de sorte que le premier élément de structure extrême du premier élément de grille soit aligné avec le second élément de structure extrême du second élément de grille, et le second élément de structure extrême du premier élément de grille soit aligné avec le premier élément de structure extrême du second élément de grille.

4. Grille de batterie selon la revendication 1, dans laquelle le second élément de grille est fixé au premier élément de grille par soudage par points.

5. Grille de batterie selon la revendication 1, dans laquelle les premier et second éléments de grille comprennent chacun au moins une partie oreille (50, 52).

6. Procédé de fabrication d'une grille de batterie poinçonnée en deux parties (20) ayant une épaisseur, le procédé comprenant les étapes consistant à :
fabriquer un premier élément de grille (22) ayant des premier et second éléments de structure latérale (30, 32) opposés et des premier et second éléments de structure extrême (34, 36) opposés s'étendant entre les premier et second éléments de structure latérale, le premier élément de grille comprenant une pluralité de fils longitudinaux (40) s'étendant entre les premier et second éléments de structure extrême à des emplacements espacés entre les premier et second éléments de structure latérale, et une pluralité de fils transversaux (42) s'étendant entre les premier et second éléments de structure latérale à des emplacements espacés entre les premier et second éléments de structure extrême ;
fabriquer un second élément de grille (24) identique au premier élément de grille, le second élément de grille ayant des premier et second éléments de structure latérale (60, 62) opposés et des premier et second éléments de structure extrême (64, 66) opposés s'étendant entre les premier et second éléments de structure latérale, le second élément de grille comprenant une pluralité de fils longitudinaux (70) s'étendant entre les premier et second éléments de structure extrême à des emplacements espacés entre les premier et second éléments de structure latérale, et une pluralité de fils transversaux (72) s'étendant entre les premier et second éléments de structure latérale à des emplacements espacés entre les premier et second éléments de structure extrême ;
retourner un des premier et second éléments de grille de 180° par rapport à son axe transversal (TA1, TA2) de sorte que les fils transversaux (42, 72) des éléments de grille soient décalés les uns par rapport aux autres ;
superposer les premier et second éléments de grille ; et
fixer ensemble le premier élément de grille et le second élément de grille.

7. Procédé selon la revendication 6, dans lequel la fabrication d'un premier élément de grille comprend l'étape consistant à fabriquer un premier élément de grille ayant une épaisseur d'environ la moitié de l'épaisseur de la grille de batterie, et la fabrication d'un second élément de grille comprend l'étape consistant à fabriquer un second élément de grille ayant une épaisseur d'environ la moitié de l'épaisseur de la grille de batterie.

8. Procédé selon la revendication 6, dans lequel la fixation ensemble du premier élément de grille et du second élément de grille comprend l'étape consistant à souder les premier et second éléments de grille l'un à l'autre.

9. Procédé selon la revendication 6, dans lequel la fabrication d'un premier élément de grille comprend l'étape consistant à poinçonner le premier élément de grille à partir d'une bande d'alliage de plomb, et la fabrication du second élément de grille comprend l'étape consistant à poinçonner le second élément de grille à partir d'une bande d'alliage de plomb.

10. Procédé selon la revendication 9, comprenant en outre l'étape consistant à couler en continu une bande d'alliage de plomb.

11. Procédé selon la revendication 6, dans lequel la fabrication du premier élément de grille comprend l'étape consistant à positionner les fils transversaux de sorte qu'ils ne soient pas symétriques par rapport à un axe transversal du premier élément de grille.

12. Procédé selon la revendication 11, dans lequel la fabrication du second élément de grille comprend l'étape consistant à positionner les fils transversaux de sorte qu'ils ne soient pas symétriques par rapport à un axe transversal du second élément de grille.
